# EUROPÄISCHE PATENTANMELDUNG

(11) **EP 0 631 424 A1**
(43) Veröffentlichungstag der Anmeldung: **28.12.1994**
(21) Anmeldenummer: 94109333.8
(22) Anmeldetag: 17.06.1994
(51) Int. Cl.: H04M 15/30

(54) **Verfahren und Vorrichtung zur Ermöglichung der Überprüfung der Gebührenabrechnung**

(30) Priorität: 23.06.1993 DE 4320812
(71) Anmelder: SWISSPHONE SYSTEMS GmbH, D-30519 Hannover (DE)
(72) Erfinder: Ertürk, Engin Dr., D-30659 Hannover (DE)
(74) Vertreter: Lins, Edgar, Dipl.-Phys. Dr.jur.

(57) **Zusammenfassung**

Zur Überprüfung einer Gebührenabrechnung für einen Fernmeldeanschluß, insbesondere einen Telefon- oder Telefaxanschluß, die von dem Betreiber des Fernmeldenetzes erstellt worden ist, unabhängig von dem Betreiber des Fernmeldenetzes nur auf seiten des Teilnehmers werden die auf den Telefonleitungen des Fernmeldeanschlusses anstehenden elektrischen Zustände bzw. ablaufenden Vorgänge erfaßt und nach automatischer Zuordnung von Zeitdaten automatisch in einem Speicher (9) abgespeichert.

## Beschreibung

Die Erfindung betrifft ein verfahren zur Ermöglichung der Überprüfung der Gebührenabrechnung für einen Fernmeldeanschluß, insbesondere einen Telefon- oder Telefaxanschluß. Die Erfindung betrifft ferner eine Vorrichtung zur Durchführung des Verfahrens.

Es ist seit langem bekannt, daß sich ein Verbraucher, der von dem Betreiber eines Fernmeldenetzes mit Gebühren belastet wird, die er für ungerechtfertigt hält, in einer rechtlich nahezu aussichtslosen Position befindet. Über Jahre hinweg ist immer wieder von Fällen öffentlich berichtet worden, in denen Telefonteilnehmer Rechnungen über mehrere 10.000,-- DM oder gar 100.000,-- DM erhalten haben, obwohl sie üblicherweise monatlich für deutlich weniger als 100,-- DM telefoniert hatten. In diesen Situationen steht die unbeweisbare Behauptung des Teilnehmers der maschinell erstellten Gebührenabrechnung des Fernmeldenetzbetreibers gegenüber. Allenfalls mit Plausiblitätsbetrachtungen kann der Teilnehmer versuchen, eine Korrektur der Abrechnung zu erreichen, da der Teilnehmer nicht belegen kann, nicht doch für die bestimmte Periode lange und teure Telefonate geführt zu haben.

Es ist bekannt, Teilnehmeranschlüsse mit Gebührenzählern zu versehen. Auf die Gebührenzähler werden Gebührenzählimpulse von dem Fernmeldenetz aufgeschaltet, und zwar dieselben Zählimpulse, die auch für die maschinelle Gebührenabrechnung benutzt werden. Der Gebührenzähler ist daher eine (verschlechterte) Kopie des Gebührenzählers im Fernmeldenetz. Beim Auftreten einer Differenz zwischen den gezählten Gebühren am Teilnehmeranschluß und im zentralen Gebührenzähler hat der niedrigere Zählerstand am Gebührenzähler des Teilnehmeranschlusses keinen überzeugenden Beweiswert. Neben den Nachteilen durch die Aufschaltung eines Gebührenzählimpulses ist der Teilnehmer nicht gegen Mißbrauch durch Dritte in der Strecke zwischen Hauswand über den Verteilerkasten bis zum Amt geschützt.

Es ist möglich, eine Zählvergleichsschaltung installieren zu lassen. Durch diese Schaltung werden alle abgehenden Telefonate registriert und danach dem Teilnehmer schriftlich mitgeteilt. Wegen der Datenschutzbestimmungen muß hierfür das schriftliche Einverständnis aller Benutzer des Teilnehmeranschlusses vorliegen. Darüber hinaus ist die Installation der Zählvergleichsschaltung teuer und läßt hohe laufende Kosten entstehen.

Durch US-PS 4,813,065 ist eine Gebührenanzeigevorrichtung bekannt, in der die Gesprächsdauer aus Signaltönen ermittelt wird. Ferner wird aus Wähltönen oder Wählimpulsen die gewählte Nummer erkannt. Die zu der ermittelten Gesprächszeit und der erkannten gewählten Nummer zutreffenden Gebühren werden einer abgespeicherten Gebührentabelle entnommen und angezeigt.

Ein ähnliches Gerät ist aus der US-PS 4,712,230 bekannt. Zusätzlich erkennt dieses Gerät ein Abschalten des Überprüfungsgerätes und speichert die Abschaltzeichen ab. Hierdurch soll eine Beeinflussung der Aufzeichnung durch den betreffenden Nebenstellenbenutzer erkennbar werden. Eine beweiskräftige Aussage gegenüber dem Telefonnetzbetreiber ist damit nicht zu erhalten, zumal in beiden zum Stand der Technik gehörenden Geräten die Uhrzeit einstellbar, also manipulierbar, ist. Jede Einstellmöglichkeit des Gerätes, auch die Konfiguration von Gebührentabellen, ermöglicht Manipulationen und vernichtet eine etwaige Beweiskraft gegenüber einer Gebührenabrechnung des Telefonnetzbetreibers. Allerdings sind die Geräte gemäß den US-PSen 4,813,065 und 4,712,230 auch gar nicht dazu vorgesehen, eine beweiskräftige Überprüfung der Abrechnung des Telefonnetzbetreibers zu ermöglichen.

Der Erfindung liegt die Aufgabe zugrunde, in einfacher Weise eine nachvollziehbare zumindest größenordnungsmäßige Überprüfung der Gebührenabrechnung des Fernmeldenetzbetreibers zu ermöglichen.

Diese Aufgabe wird mit einem Verfahren der eingangs erwähnten-Art durch folgende Verfahrensschritte gelöst:
- Erkennung des Leitungszustandes "Leitung belegt" sowie von Wählimpulsen durch Messung eines Stromflusses auf einer Telefonleitung
- Erkennung von Signaltönen und gegebenenfalls Wähltönen durch Auswertung niederfrequenter hörbarer Signale auf den Telefonleitungen
- Erkennung einer abgeklemmten Telefonleitung aus dem gemessenen Strom auf einer Telefonleitung und einer zwischen den Telefonleitungen gemessenen Spannung
- Abspeichern der erkannten Signale zusammen mit einem Zeitsignal
- automatische Durchführung der genannten Verfahrensschritte ohne unerkannte Eingriffsmöglichkeit des Benutzers
- Freigabe zum Auslesen der abgespeicherten Daten durch eine besondere Zugangsberechtigung und gebührenmäßige Auswertung der abgespeicherten Daten nach dem Auslesen.

Das erfindungsgemäße Verfahren beruht auf dem Gedanken, die am Fernmeldeanschluß vorhandenen Signale auf den Telefonleitungen, die durch Aufnehmen des Hörers bzw. Freischalten der Leitung, Aussendung der Wählzeichen, Übertragung von Rufzeichen bzw. Besetztzeichen, Schaltsignale bei der Beendigung eines Gespräches usw. vorhanden sind, zur Rekonstruktion von gebührenpflichtigen Gesprächen auszuwerten. Aufgrund der genannten Signale ist es möglich, die gewählte Nummer und die Dauer des daraufhin geführten Gespräches zu rekonstruieren, woraus dann im Falle einer Überprüfung jedenfalls größenordnungsmäßig die zu zahlenden Gebühren errechnet werden können, die mit der vom Fernmeldenetzbetreiber erstellten Abrechnung verglichen werden können.

Es ist möglich, die elektrischen Signale auf den Leitungen generell mit einer zeitlichen Zuordnung abzuspeichern und die Rekonstruktion der geführten Telefonate durch Auswertung der Signale erst dann vorzunehmen, wenn eine Überprüfung stattfindet.

Wenn die erfaßten elektrischen Zustände Wähl- und Verbindungsvorgängen zugeordnet werden und die Abspeicherung erst nach dieser Vorauswertung und ggfs. Vorselektion der Daten vorgenommen wird, kann eine wesentlich verringerte Speicherkapazität verwendet werden.

Für den Fall, daß eine Abspeicherung nur im Fall des Auftretens bestimmter Telefondaten vorgenommen wird, ist es für die Beweiskraft der Abspeicherung wichtig, auch solche Zeiten zu registrieren, in denen eine Versorgungsspannung für das die elektrischen Zustände und Vorgänge erfassende und abspeichernde Gerät abgeschaltet war. Dies kann auf verschiedene Weisen geschehen. So kann eine interne Uhr des Gerätes an eine interne Langzeitbatterie angeschlossen sein, die Uhr nach einer Unterbrechnung der Stromzuführ durch Funksignale wieder gestellt werden o.ä..

Das erfindungsgemäße Verfahren kann dazu verwendet werden, dem Teilnehmer den Telefonverkehr lediglich auszugeben, beispielsweise über einen an das Gerät angeschlossenen Drucker.

Soll die Privatsphäre des Teilnehmers sicher geschützt werden, ist es zweckmäßig, wenn die in dem Speicher abgespeicherten Signale nur mit einer besonderen Zugangsberechtigung auslesbar sind. Es ist zweckmäßig, die besondere Zugangsberechtigung durch einen Code für den Zugang zum Auslesemodus des Speichers zu realisieren. Zweckmäßigerweise können die abzuspeichernden Signale bereits in codierter Form in den Speicher eingelesen werden. Dieser Code ist zunächst nur dem Gerätehersteller bekannt und kann ggfs. an amtlicher Stelle versiegelt hinterlegt werden.

Das Konzept des erfindungsgemäßen Verfahrens sieht vor, daß die Abspeicherung der Signale automatisch für einen gewissen Zeitraum, von beispielsweise drei Monaten, erfolgt und daß in dem Speicher alle älteren Signale automatisch gelöscht werden. Ferner ist es zweckmäßig, wenn bei Ausschöpfung der Speicherkapazität neue Signale in den Speicher gelangen können und alte Signale automatisch aus dem Speicher entfernt werden. Dadurch bedarf das entsprechende Gerät keiner Bedienungsvorgänge.

Das erfindungsgemäße Verfahren ähnelt dem eines Bordschreibers eines Flugzeugs, der automatisch die Flugdaten, den Sprechfunkverkehr usw. der jeweils letzten halben Stunde des Fluges aufzeichnet, um im Falle eines Absturzes ggfs. die Unfallursache rekonstruieren zu können.

Das erfindungsgemäße Verfahren beruht darauf, die Telefoniervorgänge - ggfs. nur die für die Gebühren relevanten Telefoniervorgänge - über einen bestimmten Zeitraum, beispielsweise 3 Monate, in einer verschlossenen Box abzuspeichern und nur für den Fall zugänglich zu machen, daß eine grobe Differenz zwischen den Gebührenerwartungen des Teilnehmers und den abgerechneten Gebühren auftritt, die den Aufwand der dann erforderlichen Überprüfung rechtfertigt.

Die obengenannte Aufgabe wird ferner mit einer Vorrichtung zur Ermöglichung einer beweiskräftigen Überprüfung der Gebührenabrechnung für einen Fernmeldeanschluß, insbesondere Telefon- oder Telefaxanschluß gelöst mit
- Detektoren (2, 3, 5) zur Erkennung der Spannung zwischen den Telefonleitungen (1), eines auf einer Telefonleitung fliessenden Stromes und von niederfrequenten Signalen auf den Telefonleitungen (1),
- Auswertungseinrichtungen zur Erkennung des Leitungszustandes "Leitung belegt" sowie von Wählimpulsen aus dem Ausgangssignal des Detektors (5) für den Strom, zur Erkennung von Signaltönen und gegebenenfalls Wähltönen aus den Ausgangssignalen des Detektors (3) für niederfrequente Signale und zur Erkennung einer abgeklemmten Telefonleitung (1) aus den Ausgangssignalen der Detektoren (5, 2) für den Strom und die Spannung,
- einem Speicher (9) zum Abspeichern der erkannten und ausgewerteten Daten zusammen mit einem in der Vorrichtung erzeugten Zeitsignal,
- wobei die Vorrichtung automatisch und ohne Bedienvorgänge arbeitend ausgelegt ist und seinen Speicherinhalt automatisch durch Löschen der ältesten Daten erneuert und in einem verschlossenen Gehäuse angeordnet ist, durch das die Speicherinhalte außerhalb einer veranlaßten gebührenmäßigen Überprüfung zugriffsgeschützt sind.

Die ggfs. vorteilhafte Vorauswertung und Vorselektion der Signale geschieht dadurch, daß die Stufe einen Prozessor enthält, der eine Zuordnung der von den Detektoren erstellten Zustandssignale zu tatsächlichen Telefonvorgängen vornimmt und diesen Telefonvorgängen zugeordnet Vorgangssignale erzeugt und kombiniert mit den Zeitsignalen das Einschreiben in den Speicher steuert. Zweckmäßigerweise wird der Prozessor das Einschreiben in den Speicher nur für gebührenpflichtige Telefonvorgänge steuern.

Der Speicher kann mit einer Kapazität ausgelegt sein, die der maximalen Anzahl der prognostizierten Telefonvorgänge in einem vorgegebenen Zeitraum, beispielsweise in drei Monaten, entspricht. Der Speicher sollte dabei von einer Bauart sein, bei der abzuspeichernde Signale das Entfernen der ältesten abgespeicherten Signale bewirken.

Der Prozessor kann vorzugsweise einen einprogrammierten Code enthalten und das Auslesen des Speichers nur nach Eingabe eines geeigneten Gegencodes freigeben. Ggfs. können die Signale selbst codiert abgelegt sein und nur mit dem Gegencode als Signale wiederherstellbar sein.

Die Bausteine der Vorrichtung, insbesondere der Datenspeicher, werden vorzugsweise so vergossen, daß sie ohne Zerstörung nicht aus der Vorrichtung entfernbar sind. Dadurch wird eine höchstmögliche Sicherheit gegen einen unbefugten Zugriff auf die abgespeicherten Daten erreicht.

Durch das erfindungsgemäße Verfahren bzw. die erfindungsgemäße Vorrichtung ist es möglich, unabhängig von übertragenen Gebührensignalen des Fernmeldenetzbetreibers eine Überprüfung der vom Fernmeldenetzbetreiber erstellten Gebührenabrechnung vorzunehmen. Dabei ist nicht unbedingt eine exakte Überprüfung angestrebt, da es für die praktischen Anwendungsfälle ausreicht, jedenfalls plausibel zu machen, daß eine hohe Differenz zwischen einer erwarteten Gebührenhöhe und einer tatsächlich abgerechneten Gebührenhöhe aufgrund der Aktivitäten des Teilnehmers plausibel ist oder nicht. Da die erfindungsgemäße Erfassung der Telefonsignale gegen mißbräuchliche Eingriffe zur Verfälschung der Daten sicher ist bzw. gesichert werden kann und darüber hinaus dem Datenschutzinteresse der Teilnehmer Rechnung getragen werden kann, dürfte mit der vorliegenden Erfindung dem Teilnehmer erstmalig eine praktikable und relativ preiswerte Möglichkeit an die Hand gegeben sein, einen Gegenbeweis gegen eine überhöhte Gebührenabrechnung des Fernmeldenetzbetreibers zu führen, für die zunächst der Anschein der Richtigkeit spricht und gegen die nach bisheriger Technik ein ernsthafter Gegenbeweis praktisch nicht zu führen war.

Die Erfindung soll im folgenden anhand eines in der Zeichnung dargestellten Ausführungsbeispiels näher erläutert werden. Es zeigen:
- Figur 1: - eine schematische Darstellung eines vorwiegend zur Überprüfung dienenden Gerätes
- Figur 2: - eine schematische Darstellung eines vorwiegend zur Eigeninformation dienenden Gerätes.

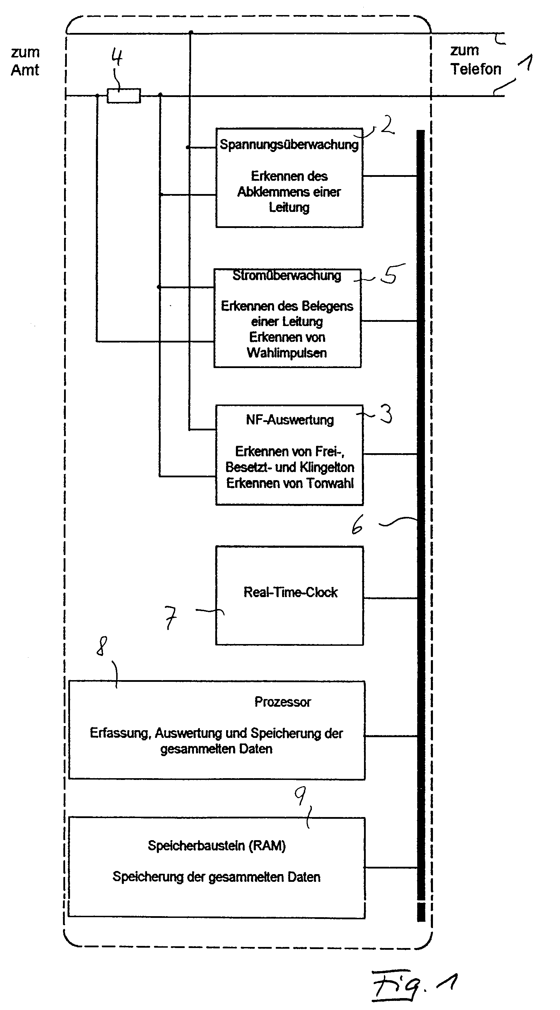

Figur 1 zeigt schematisch den Aufbau eines Gerätes, das an Telefonleitungen 1 im Bereich des Teilnehmers angeschlossen wird. Parallel zu den beiden Telefonleitungen weist das Gerät einen Detektor 2 zur Spannungsüberwachung zwischen den beiden Leitungen und einen Detektor 3 zur Auswertung von niederfrequenten Signalen auf, die auf den Leitungen übertragen werden. Die beiden Detektoren 2, 3 sind hochohmig zwischen die beiden Telefonleitungen geschaltet und liegen daher parallel zum Telefon. In eine der Telefonleitungen 1 ist ein Strommeßwiderstand 4 eingeschaltet, dessen Spannungsabfall von einem Detektor 5 zur Stromüberwachung gemessen wird.

Mit den Detektoren 2 und 5 läßt sich feststellen, ob ggfs. eine Leitung 1 abgeklemmt worden ist, weil in diesem Fall zwischen den Leitungen 1 keine Spannung anliegt und auf der stromüberwachten Leitung 1 auch kein Strom durch den Detektor 5 detektierbar ist, also auch kein Ruhestrom, der bei aufgelegtem Hörer des Telefons fließt. Durch den Detektor 5 wird einerseits erkannt, daß die Telefonleitung, beispielsweise durch Abnehmen des Hörers, belegt worden ist. Ferner sind die Wahlimpulse erkennbar, die zur Rekonstruktion der gewählten Telefonnummer auswertbar sind.

Mit dem Detektor 3 lassen sich Frei-, Besetzt- und Klingelton erkennen und auswerten. Ferner kann mit diesem Detektor 3 die gewählte Telefonnummer rekonstruiert werden, wenn die Wahl mit Hilfe von ausgesandten Tonkombinationen - also nicht mehr mit Wahlimpulsen - erfolgt.

Die von den Detektoren 2, 3, 5 detektierten Zustände werden als Zustandssignale auf einen internen Bus 6 des Geräts geleitet. An den Bus 6 ist eine interne Uhr 7 angeschlossen. Ein Prozessor 8 dient der Erfassung der Zustandsdaten der Detektoren 2, 3, 5 sowie der zugehörigen Zeitsignale, der Auswertung der gesammelten Daten und der Steuerung der Abspeicherung der so aufbereiteten Daten in einem Speicher 9 des Geräts. Die Abspeicherung kann durch den Prozessor 8 codiert erfolgen, wobei die Codierung des Prozessors vom Hersteller eingestellt und der entsprechende Gegencode zur Entschlüsselung der codierten Daten beim Hersteller oder bei einer amtlichen Stelle versiegelt hinterlegt wird.

Es ist erkennbar, daß der gesamte Telefonverkehr des Teilnehmers auf diese Weise sicher erfaßbar ist. In dem Speicher 9 sind alle Telefonvorgänge abgelegt, die sich in einem vorgegebenen Zeitraum abgespielt haben, beispielsweise innerhalb der jeweils letzten drei Monate. Ältere Daten können automatisch gelöscht werden. Im Falle des Erreichens der Kapazitätsgrenze des Speichers 9 werden die ältesten Daten aus dem Speicher beim Speichern neuer Daten automatisch entfernt.

Das dargestellte Gerät kommt ohne jegliche Bedienung aus und ist nicht dazu vorgesehen, geöffnet zu werden.

Nur im Fall einer groben Diskrepanz zwischen einer erwarteten und einer abgerechneten Gebührenhöhe kann das Gerät entfernt und beispielsweise einem Gutachter zur vertraulichen Auswertung des Inhalts des Speichers 9 unter Verwendung des dem Gutachter zur Verfügung gestellten Gegencodes übergeben werden. Der Gutachter kann dann feststellen, ob die abgerechnete Gebührenhöhe jedenfalls größenordnungsmäßig aufgrund der abgespeicherten Vorgänge zutreffen kann.

Ist das Gerät abgeschaltet bzw. sind die Telefonleitungen 1 für eine gewisse Zeit abgeklemmt gewesen, wird hierdurch die Beweiskraft der aufgezeichneten Daten naturgemäß verringert. Der Teilnehmer wird daher daran interessiert sein, derartige Unterbrechungen nicht vorzunehmen.

Figur 2 zeigt eine Modifikation des Gerätes gemäß Figur 1. Dieses Gerät ist in erster Linie für die eigene Information des Teilnehmers vorgesehen. Demzufolge ist in dem dargestellten Ausführungsbeispiel kein Detektor 2 für die Spannungsüberwachung vorgesehen. In diesem Fall ist es auch nicht unbedingt erforderlich, die im Speicher 9 abgespeicherten Signale zu codieren. Das Gerät enthält gegenüber dem Gerät in Figur 1 zusätzlich einen Druckertreiber 10, der an den Bus 6 angeschlossen ist. An das Gerät ist somit ein Drucker anschließbar, über den auf Anforderung die im Speicher abgespeicherten Informationen ausdruckbar sind.

## Patentansprüche

1. Verfahren zur Ermöglichung einer beweiskräftigen Überprüfung der Gebührenabrechnung für einen Fernmeldeanschluß, insbesondere Telefon- oder Telefaxanschluß mit folgenden Verfahrensschritten:
- Erkennung des Leitungszustandes "Leitung belegt" sowie von Wählimpulsen durch Messung eines Stromflusses auf einer Telefonleitung
- Erkennung von Signaltönen und gegebenenfalls Wähltönen durch Auswertung niederfrequenter hörbarer Signale auf den Telefonleitungen
- Erkennung einer abgeklemmten Telefonleitung aus dem gemessenen Strom auf einer Telefonleitung und einer zwischen den Telefonleitungen gemessenen Spannung
- Abspeichern der erkannten Signale zusammen mit einem Zeitsignal
- automatische Durchführung der genannten Verfahrensschritte ohne unerkannte Eingriffsmöglichkeit des Benutzers
- Freigabe zum Auslesen der abgespeicherten Daten durch eine besondere Zugangsberechtigung und gebührenmäßige Auswertung der abgespeicherten Daten nach dem Auslesen.

2. Verfahren nach Anspruch 1, dadurch gekennzeichnet, daß die erfaßten elektrischen Zustände Wähl- und Verbindungsvorgängen zugeordnet und nach dieser Vorauswertung ggf. selektiert abgespeichert werden.

3. Verfahren nach Anspruch 1 oder 2, dadurch gekennzeichnet, daß auch Zeiten registriert werden, in denen eine Versorgungsspannung für das die elektrischen Zustände bzw. Vorgänge erfassende und abspeichernde Gerät abgeschaltet bzw. in denen eine Telefonleitung (1) abgeklemmt war.

4. Verfahren nach einem der Ansprüche 1 bis 3, dadurch gekennzeichnet, daß die besondere Zugangsberechtigung in einem Code für den Zugang zum Auslesemodus des Speichers besteht.

5. Verfahren nach einem der Ansprüche 1 bis 4, dadurch gekennzeichnet, daß die besondere Zugangsberechtigung in einem Gegencode zur Entschlüsselung codiert im Speicher abgelegter Daten besteht.

6. Vorrichtung zur Ermöglichung einer beweiskräftigen Überprüfung der Gebührenabrechnung für einen Fernmeldeanschluß, insbesondere Telefon- oder Telefaxanschluß mit
- Detektoren (2, 3, 5) zur Erkennung der Spannung zwischen den Telefonleitungen (1), eines auf einer Telefonleitung fließenden Stromes und von niederfrequenten Signalen auf den Telefonleitungen (1),
- Auswertungseinrichtungen zur Erkennung des Leitungszustandes "Leitung belegt" sowie von Wählimpulsen aus dem Ausgangssignal des Detektors (5) für den Strom, zur Erkennung von Signaltönen und gegebenenfalls Wähltönen aus den Ausgangssignalen des Detektors (3) für niederfrequente Signale und zur Erkennung einer abgeklemmten Telefonleitung (1) aus den Ausgangssignalen der Detektoren (5, 2) für den Strom und die Spannung,
- einem Speicher (9) zum Abspeichern der erkannten und ausgewerteten Daten zusammen mit einem in der Vorrichtung erzeugten Zeitsignal,
- wobei die Vorrichtung automatisch und ohne Bedienvorgänge arbeitend ausgelegt ist und seinen Speicherinhalt automatisch durch Löschen der ältesten Daten erneuert und in einem verschlossenen Gehäuse angeordnet ist, durch das die Speicherinhalte außerhalb einer veranlaßten gebührenmäßigen Überprüfung zugriffsgeschützt sind.

7. Vorrichtung nach Anspruch 6 mit einer zur Zuordnung der Zeitsignale zu den erkannten Daten vorgesehenen Stufe (8), die einen Prozessor enthält, der eine Zuordnung der von den Detektoren erstellten Zustandssignale zu tatsächlichen Telefonvorgängen vornimmt und diesen Telefonvorgängen zugeordnete Vorgangssignale erzeugt und das Einschreiben dieser Signale kombiniert mit den Zeitsignalen in den Speicher (9) steuert.

8. Vorrichtung nach Anspruch 7, dadurch gekennzeichnet, daß der Prozessor (8) das Einschreiben in den Speicher (9) nur für gebührenpflichtige Telefonvorgänge steuert.

9. Vorrichtung nach einem der Ansprüche 6 bis 8, dadurch gekennzeichnet, daß der Speicher (9) mit einer Kapazität ausgelegt ist, die der maximalen Anzahl der prognostizierten Telefoniervorgänge in einem vorgegebenen Zeitraum entspricht.

10. Vorrichtung nach einem der Ansprüche 7 bis 9, dadurch gekennzeichnet, daß der Prozessor (8) einen einprogrammierten Code enthält und das Auslesen des Speichers (9) nur mit einem geeigneten Gegencode möglich ist.

11. Vorrichtung nach einem der Ansprüche 6 bis 10, dadurch gekennzeichnet, daß zumindest der Prozessor (8) und der Speicher (9) der Vorrichtung so vergossen sind, daß sie ohne Zerstörung nicht aus der Vorrichtung entfernbar sind.
